# FASCICULE DE BREVET EUROPEEN

(11) **EP 2 466 173 B1**
(45) Date de publication et mention de la délivrance du brevet: **05.03.2014**
(21) Numéro de dépôt: 11191264.8
(22) Date de dépôt: 30.11.2011
(51) Int. Cl.: F16J 15/32, F16J 15/56, B60T 13/52

(54) **Joint de piston de couvercle arrière de servofrein.**
Kolbendichtung des rückwärtigen Deckels der Servobremse
Piston seal of the rear cover of a brake servo unit

(30) Priorité: 20.12.2010 FR 1004982
(43) Date de publication de la demande: 20.06.2012
(73) Titulaire: Robert Bosch GmbH, 70442 Stuttgart (DE)
(72) Inventeur: Simon, Bacardit, Juan, 08013 Barcelone (ES); Berthomieu, Bruno, 08041 BARCELONE (ES)

(56) Documents cités:
- US-A- 4 898 081
- US-A- 5 460 074
- US-A1- 2006 169 129

## Description

### Domaine de l'invention

La présente invention se rapporte à un joint de piston de servofrein à dépression assurant le guidage et l'étanchéité du corps du piston dans le couvercle arrière et subdivisant le servofrein en deux chambres délimitées par le couvercle avant et le couvercle arrière,
- le couvercle arrière ayant une ouverture bordée par un manchon formant un épaulement, limitant le mouvement arrière de la clé du piston et se poursuivant par un rebord radial intérieur sur lequel est engagé le joint de couvercle,
- le joint ayant un corps en forme de manchon comportant:
   * une surface de guidage intérieure recevant le piston de commande avec une lèvre d'étanchéité au bord arrière,
   * un bord avant avec une lèvre extérieure d'étanchéité venant contre la surface intérieure du manchon du couvercle et une lèvre de butée pour la clé du piston,
   * une gorge de fixation du joint recevant le bord radial intérieur du manchon du couvercle.

L'invention concerne également un servofrein à dépression à deux chambres formées par deux couvercles et séparées par un piston actionnant le maître-cylindre,
- le couvercle avant recevant le maître-cylindre, et
- le couvercle arrière ayant une ouverture bordée par un manchon formant un épaulement, limitant le mouvement arrière de la clé du piston et se poursuivant par un bord radial intérieur sur lequel est engagé un joint de couvercle, ayant un corps en forme de manchon et comportant:
   * une surface de guidage intérieure recevant le corps de piston avec une lèvre d'étanchéité au bord arrière,
   * un bord avant avec une lèvre extérieure d'étanchéité venant contre la surface intérieure du manchon du couvercle et une lèvre de butée pour la clé du piston,
   * une gorge de fixation du joint recevant le bord radial intérieur du manchon du couvercle.

### Etat de la technique

Les servofreins comportent notamment un joint de couvercle placé entre le manchon prolongeant le couvercle vers l'arrière, c'est-à-dire du côté de la tige de commande du servofrein et guidant en translation le corps du piston et il assure l'étanchéité de la chambre arrière du servofrein vis-à-vis de l'extérieur. Le joint amortit aussi le mouvement de la clé du piston en phase de retour. Ce joint fonctionne parfaitement dans des conditions normales d'utilisation. Un tel joint de piston de servofrein et un tel servofrein sont connus par exemple de US 4, 898, 081. Toutefois, la tendance des constructeurs est d'assurer un fonctionnement des servofreins dans des plages de températures de plus en plus étendues. En particulier, il est souhaitable que l'étanchéité du servofrein soit réalisée dans une plage de températures de l'ordre de 160°C allant d'une température extrême à -40°C jusqu'à une température de fonctionnement très élevée de 120°C.

Or, les matières utilisées normalement pour le servofrein, c'est-à-dire l'acier pour le couvercle, la matière plastique pour le corps du piston et le caoutchouc pour le joint, ont des coefficients de dilatation thermique très différents ce qui rend difficile le respect de l'étanchéité du joint dans la plage de températures indiquée ci-dessus. En effet, à basse température, c'est-à-dire à -40°C, l'étanchéité est difficilement réalisable par le diamètre intérieur du joint, car la matière du joint augmente en dureté et le joint se contracte par rapport à l'acier du couvercle.

### But de l'invention

La présente invention a pour but de développer un joint de couvercle ou de corps de piston de servofrein permettant d'assurer l'étanchéité parfaite du servofrein dans des plages de températures extrêmes d'une étendue de l'ordre d'au moins 160°C entre une température très basse de l'ordre de -40°C jusqu'à une température très élevée de l'ordre de 120°C, sans compliquer la réalisation ou l'installation du joint sur le servofrein, ni avoir à modifier la structure du servofrein.

L'invention développe également des servofreins équipés d'un tel joint de corps de piston.

### Exposé et avantages de l'invention

A cet effet, l'invention a pour objet un joint de servofrein du type défini ci-dessus, caractérisé en ce que, le joint a un bord arrière portant une lèvre en forme de manchon issue du corps à la base de la butée arrière de la gorge de fixation, cette lèvre étant rabattable par-dessus la butée arrière et le manchon du couvercle après installation du joint sur le bord radial intérieur du manchon.

Le joint selon l'invention, tel que défini ci-dessus, permet d'assurer une excellente étanchéité malgré les effets du durcissement de la matière du joint et de sa contraction par rapport à l'acier du couvercle aux basses températures puisque le joint entoure le bord extérieur du manchon et couvre celui-ci non seulement du côté intérieur autour du bord radial intérieur du manchon du couvercle, mais également sur le côté extérieur. Ainsi la rétraction du joint sous l'effet de l'abaissement très fort de la température agit dans un sens opposé côté intérieur et côté extérieur du manchon du couvercle de sorte que, quelle que soit la variation de température dans le sens de l'abaissement ou de l'élévation de température, les effets opposés, de la partie du joint à l'intérieur du manchon et de la lèvre rabattable sur le côté extérieur, se compensent et assurent toujours l'étanchéité.

Ces variations par rétraction/dilatation des différents éléments en contact au niveau du joint, c'est-à-dire le manchon du couvercle et le corps du piston de commande, ne nécessitent des précautions particulières qu'au niveau extérieur, l'étanchéité entre le corps du joint et le corps du piston de commande étant assurée, puisque le joint est extérieur au corps de piston et aux diminutions de températures, il se rétracte sur le piston et aux élévations de températures, il est appliqué contre le piston par le bord radial du manchon qui se dilate vers l'intérieur.

Suivant une autre caractéristique avantageuse, la lèvre rabattable se termine par un talon prenant appui élastiquement sur le manchon du couvercle.

Le talon bordant la lèvre rabattable permet de réaliser un contact linéaire et donc une pression d'étanchéité relativement élevée en formant un anneau d'étanchéité autour du manchon du couvercle.

Suivant une autre caractéristique avantageuse, la lèvre rabattable est issue du corps du joint à l'arrière de la butée extérieure arrière délimitant la gorge de fixation du joint.

La lèvre rabattable portée par le corps du joint assure non seulement une étanchéité complémentaire lorsque la lèvre est rabattue sur la surface extérieure du manchon du couvercle mais par sa forme ainsi rabattue elle renforce l'appui de la butée extérieure arrière bordant la gorge de fixation du joint contre le bord radial intérieur du manchon. La lèvre rabattable ainsi positionnée permet également de créer une chambre d'étanchéité autour de la butée extérieure arrière, de sorte que l'élasticité du bord de la lèvre, notamment en forme de talon, peut s'exercer sans être réduite par les efforts exercés sur la butée extérieure arrière.

L'invention a également pour objet le servofrein assemblé, équipé d'un tel joint de piston et plus particulièrement un servofrein à dépression à deux chambres formées par deux couvercles et séparées par un piston actionnant le maître-cylindre,
- le couvercle avant recevant le maître-cylindre, et
- le couvercle arrière ayant une ouverture bordée par un manchon formant un épaulement limitant le mouvement arrière de la clé du piston et se poursuivant par un bord radial intérieur sur lequel est engagé un joint de couvercle, ayant un corps en forme de manchon et comportant:
   * une surface de guidage intérieure recevant le corps de piston avec une lèvre d'étanchéité au bord arrière,
   * un bord avant avec une lèvre extérieure d'étanchéité venant contre la surface intérieure du manchon du couvercle et une lèvre de butée pour la clé du piston,
   * une gorge de fixation du joint recevant le bord radial intérieur du manchon du couvercle,
caractérisé en ce que
le joint de piston a un bord arrière portant une lèvre en forme de manchon issue du corps du joint à la base de la butée arrière de la gorge, cette lèvre étant rabattue par-dessus la butée arrière et le manchon du couvercle.

La fabrication de ce servofrein a l'avantage d'utiliser tous les composants existants sans nécessiter de transformation particulière.

### Dessins

La présente invention sera décrite ci-après de manière plus détaillée à l'aide d'un mode de réalisation d'un joint de servofrein selon l'invention ainsi que d'un servofrein équipé d'un tel joint. Ainsi :
- la figure 1 est une vue en coupe simplifiée d'un servofrein équipé d'un joint selon l'invention,
- la figure 2A est une vue à échelle très agrandie de la section d'un joint selon l'invention à l'état installé,
- la figure 2B est une vue en demi-coupe correspondant à la figure 2A du joint à l'état libre,
- les figures 3A,B,C montrent le détail d'un joint selon l'invention :

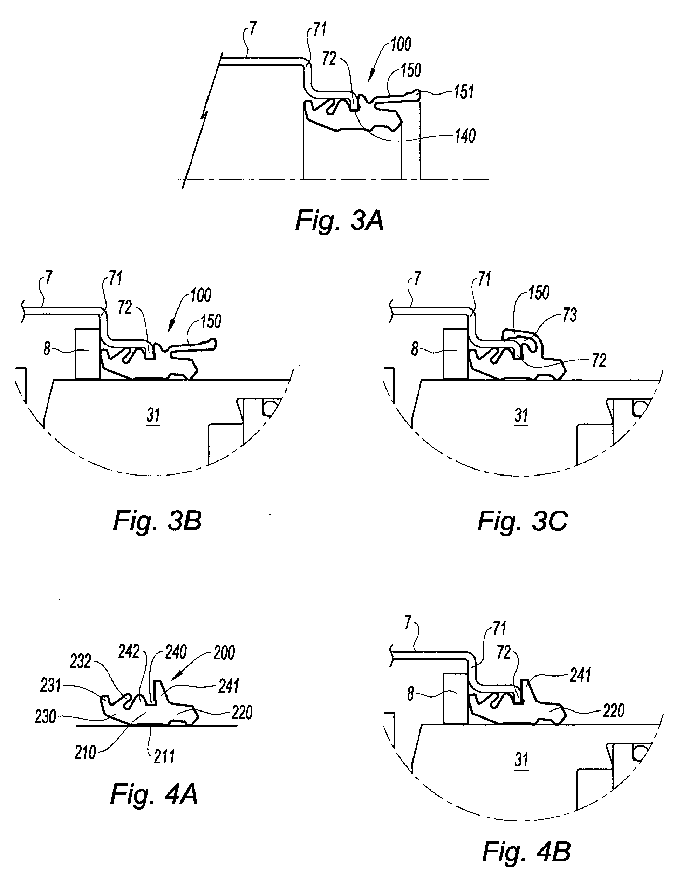

   * la figure 3A montre le joint en demi-coupe, installé sur le bord du manchon
   * la figure 3B montre le joint après le montage du servofrein,
   * la figure 3C montre le joint en position complètement installé,
- les figures 4A, B montrent à titre de comparaison un joint selon l'état de la technique:
   * la figure 4A montre une demi-coupe du joint non installé,
   * la figure4B montre le joint connu à l'état installé.

### Description de modes de réalisation de l'invention

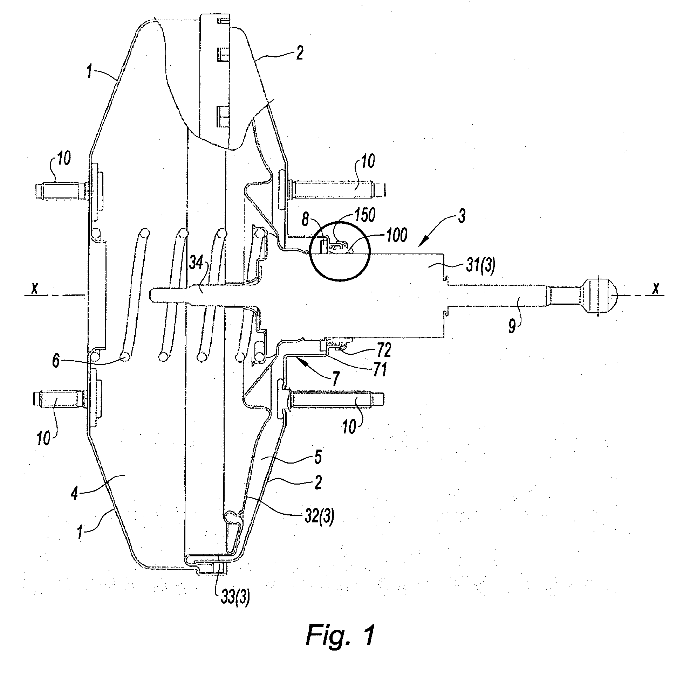

Selon la figure 1, l'invention concerne un joint de piston 100 de servofrein à dépression représenté schématiquement en coupe axiale. Le servofrein se compose d'un couvercle avant 1 et d'un couvercle arrière 2 entre lesquels le piston 3 délimite une chambre avant 4 et une chambre arrière 5. Selon l'axe xx, le servofrein est traversé par le corps 31 du piston 3 dont le disque 32 est relié par un joint déroulant 33 à la jonction du couvercle avant 1 et du couvercle arrière 2. Le corps 31 du piston 3 se termine à l'avant par un poussoir 34 actionnant le maître-cylindre non représenté logé dans le couvercle avant 1 à l'intérieur du ressort de rappel 6 du piston 3. Le couvercle arrière 2 comporte un manchon 7 formant un épaulement 71 et se poursuivant par un bord radial intérieur 72 sur lequel est fixé le joint 100 selon l'invention. L'épaulement 71 sert de butée à la clé 8 portée par le corps du piston 31 pour limiter son mouvement de recul. Le corps de piston 31 reçoit la tige de commande 9 actionnée par la pédale de frein.

Le couvercle avant 1 et le couvercle arrière 2 portent des tiges filetées 10 servant à la fixation.

La structure du corps de piston 31 avec les mécanismes de déclenchement du servofrein, d'application de la dépression et d'alimentation en air de la chambre arrière, sont des moyens connus en soi, non représentés ni décrits ici.

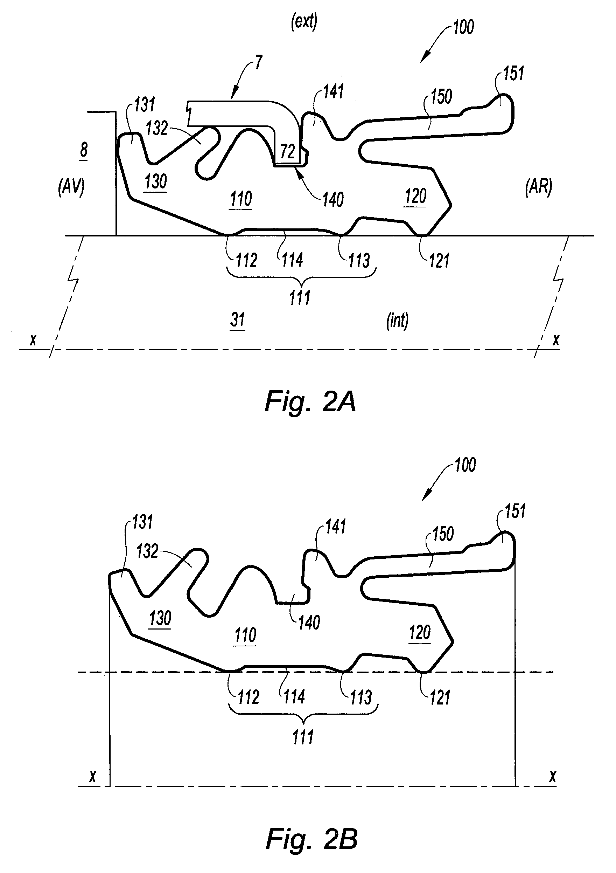

Le joint 100 en forme de manchon selon l'invention, sera décrit de manière plus détaillée à l'aide des figures 2A et 2B et son montage à l'aide des figures 3A-3C. La figure 2A donne des indications d'orientation utilisées par convention à savoir: le côté avant (AV) et le côté arrière (AR) situés respectivement à droite et à gauche du joint 100 ainsi que le côté intérieur (int) et le côté extérieur (ext) situés respectivement entre le joint 100 et son axe xx et à l'extérieur du joint 100.

Selon la section de la figure 2A, du joint 100 qui est une pièce de révolution d'axe x-x se compose d'un corps 110 dont la surface intérieure forme la surface de guidage 111 du corps de piston 31 sur lequel s'appuie le joint 100 par une première couronne intérieure 112 et une deuxième couronne intérieure 113 délimitant entre elles une chambre d'étanchéité 114. Le corps 110 comporte un bord arrière 120 muni d'une lèvre arrière 121 s'appuyant sur le corps de piston 31 et complétant l'étanchéité. Le bord avant 130 du corps du joint est terminé par une lèvre de butée 131 pour amortir le mouvement de recul du corps de piston 31 en recevant la clé 8. Extérieurement, le joint 100 comporte une gorge de fixation 140 pour le bord radial intérieur 72 du manchon 7 du couvercle 2. Cette gorge 140 bordée de deux butées 141, 142 est précédée d'une lèvre extérieure avant 132 s'appliquant contre la surface intérieure du manchon 7. La gorge de fixation 140 est bordée côté arrière par une butée périphérique extérieure 141 et porte une lèvre rabattable 150 en forme de manchon dont l'extrémité est bordée d'un talon 151. La lèvre rabattable 150 occupe une position tournée vers l'arrière avant le montage complet du joint 100 sur le bord radial intérieur 72 du couvercle 2.

La lèvre rabattable 150 est issue du corps du joint 110 à l'arrière de la butée extérieure 141 et de façon indépendante de cette butée extérieure 141.

La figure 2B montre le joint de couvercle 100 à l'état libre. Cet état libre se distingue de l'état en première phase d'assemblage sur le couvercle 2 en ce que la lèvre extérieure avant 132 et la lèvre de butée 131 sont déployées.

Le montage du joint 100 selon l'invention se fait comme représenté aux figures 3A, 3B, 3C.

La figure 3A montre la première étape consistant à installer le joint 100 sur le bord radial intérieur 72 du manchon 7 du couvercle 2 avant la mise en place du corps du piston. Puis, dans une deuxième étape (figure 3B), on met en place le corps 31 du piston en assemblant le servofrein. Ensuite, on rabat la lèvre 150 par-dessus le manchon 7 du couvercle 2 (figure 3C). Le talon 151 s'appuie sur la surface extérieure du manchon 7 et crée une chambre d'étanchéité 73 autour du bord radial 72 en laissant libre la butée extérieure arrière 141.

Les figures 4A, 4B montrent à titre de comparaison, la structure d'un joint connu 200 à la place du joint de piston 100 selon l'invention.

Le joint connu 200 est une pièce de révolution, dont la section libre est représentée à la figure 4A. Le joint 200 se compose d'un corps 210 formant la surface de guidage 211 du piston 3 avec un bord arrière 220 muni d'une lèvre arrière 221 appliquée sur le corps 31 du piston 3, un bord avant 230 muni d'une lèvre de butée 231 et d'une lèvre extérieure avant 232, ainsi que d'une gorge de fixation 240 du joint sur le bord radial intérieur 72 du manchon 7 du couvercle. Cette gorge 240 est délimitée par une butée extérieure arrière 241 qui dépasse radialement l'autre butée 242 de la gorge de fixation 240.

Le joint 100 selon l'invention tel que décrit ci-dessus s'utilise comme joint de piston de couvercle arrière de servofrein. Ce joint est monté au moment de l'assemblage du servofrein et ainsi l'invention concerne également les servofreins équipés d'un joint de piston.

De manière générale, l'invention concerne le domaine des systèmes de freinage équipés de servofreins.

### NOMENCLATURE DES ELEMENTS PRINCIPAUX

- 1: couvercle avant du servofrein
- 2: couvercle arrière du servofrein
- 3: piston

- 31: corps
- 32: disque
- 33: joint déroulant
- 34: poussoir

- 4: chambre avant
- 5: chambre arrière
- 6: ressort de rappel
- 7: manchon

- 71: épaulement
- 72: bord radial intérieur

- 8: clé
- 9: tige de commande
- 10: tige filetée
- 100: joint de piston selon l'invention
- 110: corps du joint
- 111: surface de guidage intérieure
- 112: première couronne intérieure
- 113: deuxième couronne intérieure
- 114: chambre d'étanchéité
- 120: bord arrière
- 121: lèvre arrière
- 130: bord avant
- 131: lèvre de butée
- 132: lèvre extérieure
- 140: gorge de fixation du joint
- 141: buté extérieure arrière
- 142: butée extérieure avant
- 150: lèvre rabattable
- 151: talon
- 200: joint connu
- 210: corps du joint
- 211: surface de guidage
- 220: bord arrière
- 221: lèvre arrière
- 230: bord avant
- 231: lèvre de butée
- 232: lèvre extérieure avant
- 240: gorge de fixation
- 241: butée extérieure arrière
- 242: butée extérieure avant

## Revendications

1. Joint (100) de piston de servofrein à dépression pour assurer le guidage et l'étanchéité du corps du piston (3) dans le couvercle arrière (2) et pour subdiviser le servofrein en deux chambres délimitées par le couvercle avant (1) et le couvercle arrière (2),
- le couvercle arrière (2) ayant une ouverture bordée par un manchon (7) formant un épaulement (71), limitant le mouvement arrière de la clé (8) du piston (3) et se poursuivant par un rebord radial intérieur (72) sur lequel est engagé le joint de couvercle,
- le joint (100) ayant un corps en forme de manchon comportant:
* une surface de guidage (111) intérieure recevant le piston de commande avec une lèvre d'étanchéité (121) au bord arrière (120),
* un bord avant (130) avec une lèvre extérieure (132) d'étanchéité venant contre la surface intérieure du manchon (7) du couvercle (2) et une lèvre de butée (131) pour la clé (8) du piston (3),
* une gorge de fixation (140) du joint recevant le bord radial intérieur (72) du manchon (7) du couvercle (2),
**caractérisé en ce que**
le joint (100) a un bord arrière (120) portant une lèvre en forme de manchon (150) issue du corps (110) à la base de la butée arrière (141) de la gorge de fixation (140), cette lèvre (150) étant rabattable par-dessus la butée arrière (141) et le manchon (7) du couvercle (2) après installation du joint (100) sur le bord radial intérieur (72) du manchon (7).

2. Joint de piston selon la revendication 1,
**caractérisé en ce que**
la lèvre rabattable (150) se termine par un talon (151) prenant appui élastiquement sur le manchon (7) du couvercle (2).

3. Joint de piston selon la revendication 1,
**caractérisé en ce que**
la lèvre rabattable (150) est issue du corps du joint (110) à l'arrière de la butée extérieure arrière (141) délimitant la gorge de fixation (140) du joint (100).

4. Servofrein à dépression à deux chambres formées par deux couvercles (1, 2) et séparées par un piston (3) actionnant le maître-cylindre,
- le couvercle avant (1) recevant le maître-cylindre, et
- le couvercle arrière (2) ayant une ouverture bordée par un manchon (7) formant un épaulement (71), limitant le mouvement arrière de la clé (8) du piston (3) et se poursuivant par un bord radial intérieur (72) sur lequel est engagé un joint de couvercle, ayant un corps en forme de manchon et comportant:
* une surface de guidage (111) intérieure recevant le corps de piston (3) avec une lèvre d'étanchéité (121) au bord arrière (120),
* un bord avant (130) avec une lèvre extérieure (132) d'étanchéité venant contre la surface intérieure du manchon (7) du couvercle (2) et une lèvre de butée (131) pour la clé (8) du piston (3),
* une gorge de fixation (140) du joint recevant le bord radial intérieur (72) du manchon (7) du couvercle (2),
**caractérisé en ce que**
le joint de piston (100) a un bord arrière (120) portant une lèvre en forme de manchon (150) issue du corps du joint (110) à la base de la butée arrière (141) de la gorge (140), cette lèvre (150) étant rabattue par-dessus la butée arrière (141) et le manchon (7) du couvercle.

## Patentansprüche

1. Kolbendichtung (100) eines Unterdruck-Bremskraftverstärkers, um die Führung und die Dichtheit des Körpers des Kolbens (3) im hinteren Deckel (2) zu gewährleisten, und um den Bremskraftverstärker in zwei Kammern zu unterteilen, die vom vorderen Deckel (1) und vom hinteren Deckel (2) begrenzt werden,
- wobei der hintere Deckel (2) eine Öffnung hat, die von einer Muffe (7) umrandet wird, die eine Schulter (71) bildet, welche die Rückwärtsbewegung des Schlüssels (8) des Kolbens (3) begrenzt und sich in einer inneren radialen Randleiste (72) fortsetzt, auf der die Deckeldichtung in Eingriff ist,
- wobei die Dichtung (100) einen muffenförmigen Körper hat, der aufweist:
* eine den Steuerkolben aufnehmende innere Führungsfläche (111) mit einer Dichtlippe (121) am hinteren Rand (120);
* einen vorderen Rand (130) mit einer äußeren Dichtlippe (132), die sich gegen die Innenfläche der Muffe (7) des Deckels (2) anlegt, und einer Anschlaglippe (131) für den Schlüssel (8) des Kolbens (3),
* eine Befestigungsrille (140) der Dichtung, die den inneren radialen Rand (72) der Muffe (7) des Deckels (2) aufnimmt,
**dadurch gekennzeichnet, dass**
die Dichtung (100) einen hinteren Rand (120) hat, der eine muffenförmige Lippe (150) trägt, die aus dem Körper (110) an der Basis des hinteren Anschlags (141) der Befestigungsrille (140) hervorgeht, wobei diese Lippe (150) über den hinteren Anschlag (141) und die Muffe (7) des Deckels (2) nach dem Einbau der Dichtung (100) auf den inneren radialen Rand (72) der Muffe (7) umklappbar ist.

2. Kolbendichtung nach Anspruch 1, **dadurch gekennzeichnet, dass** die umklappbare Lippe (150) in einem Wulst (151) endet, der elastisch auf der Muffe (7) des Deckels (2) aufliegt.

3. Kolbendichtung nach Anspruch 1, **dadurch gekennzeichnet, dass** die umklappbare Lippe (150) aus dem Körper der Dichtung (110) an der Rückseite des hinteren äußeren Anschlags (141) hervorgeht, der die Befestigungsrille (140) der Dichtung (100) begrenzt.

4. Unterdruck-Bremskraftverstärker mit zwei Kammern, die von zwei Deckeln (1, 2) geformt und von einem Kolben (3) getrennt werden, der den Hauptbremszylinder betätigt,
- wobei der vordere Deckel (1) den Hauptbremszylinder aufnimmt, und
- der hintere Deckel (2) eine Öffnung hat, die von einer Muffe (7) umrandet wird, die eine Schulter (71) formt, welche die Rückwärtsbewegung des Schlüssels (8) des Kolbens (3) begrenzt und sich durch einen inneren radialen Rand (72) fortsetzt, auf dem eine Deckeldichtung in Eingriff ist, die einen muffenförmigen Körper hat und aufweist:
* eine den Kolbenkörper (3) aufnehmende innere Führungsfläche (111) mit einer Dichtlippe (121) am hinteren Rand (120),
* einen vorderen Rand (130) mit einer äußeren Dichtlippe (132), die sich gegen die Innenfläche der Muffe (7) des Deckels (2) anlegt, und einer Anschlaglippe (131) für den Schlüssel (8) des Kolbens (3),
* eine Befestigungsrille (140) der Dichtung, die den inneren radialen Rand (72) der Muffe (7) des Deckels (2) aufnimmt,
**dadurch gekennzeichnet, dass**
die Kolbendichtung (100) einen hinteren Rand (120) hat, der eine muffenförmige Lippe (150) trägt, die aus dem Körper der Dichtung (110) an der Basis des hinteren Anschlags (141) der Rille (140) hervorgeht, wobei diese Lippe (150) über den hinteren Anschlag (141) und die Muffe (7) des Deckels umgeklappt wird.

## Claims

1. Piston seal (100) for a vacuum-assisted brake servo unit to provide the guidance and sealing of the piston body (3) in the rear cover (2) and to subdivide the brake servo unit into two chambers defined by the front cover (1) and the rear cover (2),
- the rear cover (2) having an opening bounded by a sleeve (7), forming a shoulder (71) limiting the rear movement of the key (8) of the piston (3) and continued by an internal radial edge (72) on which the cover seal is engaged,
- the seal (100) having a sleeve-shaped body, comprising:
* an internal guide surface (111) receiving the control piston with a sealing lip (121) on the rear edge (120),
* a front edge (130) with an external sealing lip (132) bearing against the internal surface of the sleeve (7) of the cover (2) and an abutment lip (131) for the key (8) of the piston (3),
* a fixing groove (140) of the seal receiving the internal radial edge (72) of the sleeve (7) of the cover (2),
**characterized in that**
the seal (100) has a rear edge (120) bearing a sleeve-shaped lip (150) emerging from the body (110) at the base of the rear abutment (141) of the fixing groove (140), said lip (150) being able to be folded over the rear abutment (141) and the sleeve (7) of the cover (2) after installation of the seal (100) on the internal radial edge (72) of the sleeve (7).

2. Piston seal according to Claim 1,
**characterized in that**
the foldable lip (150) is terminated by a projection (151) bearing in a resilient manner against the sleeve (7) of the cover (2).

3. Piston seal according to Claim 1,
**characterized in that**
the foldable lip (150) emerges from the body of the seal (110) to the rear of the rear external abutment (141) defining the fixing groove (140) of the seal (100).

4. Vacuum-assisted brake servo unit having two chambers formed by two covers (1, 2) and separated by a piston (3) actuating the master cylinder,
- the front cover (1) receiving the master cylinder, and
- the rear cover (2) having an opening bounded by a sleeve (7), forming a shoulder (71) limiting the rear movement of the key (8) of the piston (3) and continued by an internal radial edge (72) on which a cover seal having a sleeve-shaped body is engaged, and comprising:
* an internal guide surface (111) receiving the piston body (3) with a sealing lip (121) on the rear edge (120),
* a front edge (130) with an external sealing lip (132) bearing against the internal surface of the sleeve (7) of the cover (2) and an abutment lip (131) for the key (8) of the piston (3),
* a fixing groove (140) of the seal receiving the internal radial edge (72) of the sleeve (7) of the cover (2),
**characterized in that**
the piston seal (100) has a rear edge (120) bearing a sleeve-shaped lip (150) emerging from the body of the seal (110) at the base of the rear abutment (141) of the groove (140), said lip (150) being folded over the rear abutment (141) and the sleeve (7) of the cover.
